# EUROPÄISCHE PATENTANMELDUNG

(11) **EP 1 744 017 A1**
(43) Veröffentlichungstag der Anmeldung: **17.01.2007**
(21) Anmeldenummer: 05015348.5
(22) Anmeldetag: 14.07.2005
(51) Int. Cl.: F01D 25/26

(54) **Kombinierte Dampfturbine, Dampf- oder Gas- und Dampf- Turbinenanlage, Verfahren zum Betrieb einer kombinierten Dampfturbine**

(71) Anmelder: SIEMENS AKTIENGESELLSCHAFT, 80333 München (DE)
(72) Erfinder: Wieghardt, Kai Dr, 44869 Bochum (DE)

(57) **Zusammenfassung**

Kombinierte Dampfturbinen weisen ein Hochdruckmodul (1, 45) und ein Mitteldruckmodul (3, 47) in einem beiden Modulen gemeinsamen Gehäuse (5) auf, wobei das Gehäuse (5) ein eine Expansionsstrecke (7) umfassendes Innengehäuse (9, 43) und ein das Innengehäuse (9, 43) umfassendes Außengehäuse (11, 41) aufweist und wobei das Innengehäuse (9, 43) durch mit Fügemittel zusammengefügte Teile (9A, 43A) gebildet ist. Üblicherweise sind kombinierte Dampfturbinen für unterkritische Dampfzustände ausgelegt. Um eine kombinierte Dampfturbine (10, 20, 30, 40) auch für überkritische Dampfzustände nutzen zu können, ist im Unterschied zu üblichen kombinierten Dampfturbinen ein Gehäuse (5) mit einer sicheren und beständigen Schließwirkung versehen. Gemäß dem neuen Konzept ist dazu das Hochdruckmodul (1, 45) zur Beaufschlagung einer Expansionsstrecke (7A) mit Dampf bei überkritischen Dampfzuständen ausgelegt und das Hochdruckmodul (1, 45) und/oder das Mitteldruckmodul (3, 47) weist zur Unterstützung der Fügemittel ein Druckmittel zum Zusammendrücken der Teile (9A, 43A) des Innengehäuses (9, 43) auf.

## Beschreibung

Die Erfindung betrifft eine kombinierte Dampfturbine mit einem Hochdruckmodul und einem Mitteldruckmodul in einem beiden Modulen gemeinsamem Gehäuse, wobei das Gehäuse ein zwei Expansionsstrecken umfassendes Innengehäuse und ein das Innengehäuse umfassendes Außengehäuse aufweist, und wobei das Innengehäuse durch mit Fügemittel zusammengefügte Teile gebildet ist. Die Erfindung betrifft weiter eine Dampf- oder Gas- und Dampfturbinenanlage mit einer kombinierten Dampfturbine und ein Verfahren zum Betrieb einer kombinierten Dampfturbine.

Zur Erreichung immer höherer Wirkungsgrade geht man bei Dampfturbinen inzwischen dazu über, Arbeitsmedium in Form von Heißdampf bei überkritischen Dampfparametern einzusetzen, d. h. Dampf mit einer Temperatur über 374,1 °C und über 221,3 bar. Üblicherweise weist überkritischer Heißdampf Drücke jenseits von 240 bar auf, bei Temperaturen oberhalb von 560 °C. Die Dampftemperaturen der dazugehörigen Mitteldruck-Expansion liegen üblicherweise noch 10 K bis 30 K darüber, bei Drücken von ca. 40 bar bis 70 bar.

Zur Beaufschlagung mit überkritischem Heißdampf eignen sich bekanntermaßen prinzipiell so genannte Hochdruckdampfturbinen, die hinsichtlich ihrer Materialeigenschaft, ihrer Konstruktion und ihrer Bauweise entsprechend ausgelegt sind. Zur Erzielung hoher Wirkungsgrade sind insbesondere Hochdruckdampfturbinen in einer so genannten Topfbauweise geeignet. Diese weisen ein Innengehäuse und ein Außengehäuse auf, wobei das Innengehäuse eine Expansionsstrecke umfasst und damit höchsten Heißdampfparametern ausgesetzt ist, andererseits aber auch in einem zwischen Außengehäuse und Innengehäuse liegenden Raum von außen zusammengepresst und gekühlt werden kann.

Einschalige Bauweisen für Dampfturbinen haben sich dagegen als weniger geeignet im überkritischen Bereich erwiesen, da ein einziges drucktragendes Gehäuse nicht ausreichend sicher und beständig gegen die hohen Drücke und Temperaturen im überkritischen Bereich verschließbar ist. Vor allem mangelt es an martensitischen Stählen, z. B. für die Schrauben, die eine ausreichende Festigkeit auch jenseits von 580 °C haben. Zudem ist die Ausbildung von thermisch ausreichend trägen Außengehäusen in der Regel mit einem zu hohen Kostenaufwand verbunden.

Wünschenswert wäre eine kombinierte Dampfturbine, die für den überkritischen Bereich geeignet ist.

An dieser Stelle setzt die Erfindung an, deren Aufgabe es ist, eine kombinierte Dampfturbine der eingangs genannten Art so auszubilden, dass sie für überkritische Dampfzustände einsetzbar ist und dabei insbesondere ein Gehäuse mit ausreichend sicherer und beständiger Schließwirkung für überkritische Heißdampfzustände aufweist.

Die Erfindung betreffend die Dampfturbine wird gelöst durch eine Dampfturbine der eingangs genannten Art, bei der erfindungsgemäß das Hochdruckmodul zur Beaufschlagung einer Expansionsstrecke mit Dampf bei überkritischen Dampfzuständen ausgelegt ist, und das Hochdruckmodul und/oder Mitteldruckmodul zur Unterstützung der Fügemittel, weitere Druckmittel zum Zusammendrücken der Teile des Innengehäuses aufweist.

Der Begriff "Modul" bezeichnet ganz allgemein für unterschiedliche Beaufschlagungsparameter vorgesehene Teile einer kombinierten Dampfturbine, ohne dass der Begriff "Modul" eine baulich modulare Einheit implizieren müsste.

Die Erfindung geht dabei von der Überlegung aus, dass sich eine kombinierte Dampfturbine mit einem Hochdruckmodul und einem Mitteldruckmodul und einem beiden Modulen gemeinsamen Gehäuse nur dann für den überkritischen Dampfzustand eignet, wenn sie zweischalig aufgebaut ist. Die Erfindung geht deshalb von einer eingangs genannten kombinierten Dampfturbine aus, wobei das Gehäuse ein eine Expansionsstrecke umfassendes Innengehäuse und ein das Innengehäuse umfassendes Außengehäuse aufweist. Dies hat nämlich den Vorteil, dass das Innengehäuse gekühlt werden kann. Dies wiederum führt dazu, dass ein druckhaltendes Außengehäuse im Vergleich zu einem einzigen (einschaligen) Außengehäuse keinen so hohen thermischen Beanspruchungen ausgesetzt ist. In der zweischaligen Bauweise muss ein Außengehäuse also nicht notwendigerweise vollständig hinsichtlich einer überkritischen Heißdampfbeaufschlagung ausgelegt sein.

Die oben genannte zweischalige Bauweise von Gehäusen eignet sich aufgrund der Kühlmöglichkeit in besonderem Maße für die Realisierung von kombinierten Dampfturbinen auch im überkritischen Bereich. Eine naive unreflektierte Aggregation einer Hochdruckturbine mit einer Mitteldruckturbine führt jedoch nicht zur Ausbildung einer kombinierten Dampfturbine im überkritischen Bereich. Vielmehr ist es wünschenswert auch das zweischalige Gehäuse einer für den überkritischen Bereich geeigneten kombinierten Dampfturbine mit einer verbesserten Schließwirkung gegenüber Heißdampfparametern im überkritischen Bereich, insbesondere mit einem verbesserten Druckhaltevermögen, auszugestalten.

Die Erfindung hat an dieser Stelle erkannt, dass es dennoch hinsichtlich des Innengehäuses, das üblicherweise durch mit Fügemittel zusammengefügte Teile gebildet ist, notwendig ist, im Hochdruckmodul und/oder im Mitteldruckmodul zur Unterstützung der Fügemittel, weitere Druckmittel zum Zusammendrücken der Teile des Innengehäuses vorzusehen. Üblicherweise sind beim Innengehäuse Fügemittel wie Schrauben oder Bolzen vorgesehen, die das Innengehäuse entlang einer üblicherweise horizontal verlaufenden Teilfuge an Flanschen zusammenhält. Um diese Fügemittel zur Erreichung einer auch bei überkritischen Dampfzuständen ausreichend sicheren und beständigen Schließwirkung zu ergänzen, hat die Erfindung erkannt, dass weitere Druckmittel zum Zusammendrücken der Teile des Innengehäuses notwendig sind. Dies macht nämlich gerade im überkritischen Heißdampfbereich bestehende Wirkungsgradnachteile bei einer kombinierten Dampfturbine weitgehend wett. Selbst überkritische Heißdampfzustände werden ökonomisch und sicher gehandhabt.

Das Außengehäuse könnte beispielsweise als ein so genanntes GGG-Außengehäuse ausgebildet sein, d. h. aus einem Eisen-/Grauguss mit globularem Grafitanteil. Das Innengehäuse ist vorzugsweise gekühlt und dessen thermisch hochbelastete Bereiche sind vorzugsweise aus einem hochwarmfesten Stahl, z. B. einem 1-%-Cr- oder 10-%-Cr-Stahl oder einem Superalloy-Werkstoff, z. B. einem auf Nickel- oder Kobaltbasis gebildeten Werkstoff, beispielsweise A617, gebildet.

Die Erfindung umfasst insbesondere zwei wesentliche Varianten.

In einer ersten Variante ist vorgesehen, einen im Hochdruckmodul und/oder Mitteldruckmodul zwischen Außengehäuse und Innengehäuse liegenden Raum zur Bildung des Druckmittels zu nutzen, nämlich indem im Betriebszustand der Raum mit hochgespanntem Dampf beaufschlagt wird, d. h. mit Dampf dessen Druck höher ist als in mindestens einer Einströmöffnung für mindestens eine der zwei Expansionsstrecken. Ein solcher zwischen Außengehäuse und Innengehäuse liegender Raum kann insbesondere ein für das Mitteldruckmodul und das Hochdruckmodul gemeinsam bestehender Raum sein. Vorzugsweise liegen aber für das Mitteldruckmodul und für das Hochdruckmodul weitestgehend getrennte Räume vor, die ggf. im Rahmen von Weiterbildungen dieser Variante miteinander verbunden sein können.

Unter hochgespanntem Dampf wird ein Dampf verstanden, der mindestens einen höheren Druck aufweist, als ein sich in der Expansionsstrecke befindlicher Dampf des jeweiligen Moduls. Auf diese Weise wird auf die Teile des Innengehäuses eine zusätzliche von außen wirkende Presswirkung erreicht, die dazu führt, dass die Teile des Innengehäuses durch den hochgespannten Dampf als Druckmittel zusammengedrückt werden.

In einer besonders bevorzugten Weiterbildung dieser ersten Variante ist der hochgespannte Dampf in Form von Kühldampf gebildet und der Raum ist in Form eines zwischen Außengehäuse und Innengehäuse liegenden Kühlraumes gebildet.

In einer weiteren bevorzugten Weiterbildung ist der Raum mit einer Zuführleitung für hochgespannten Dampf verbunden und mit einem gegen unmittelbar aus der Expansionsstrecke austretenden Dampf dichtenden Trennmittel verschlossen. Damit wird die Druck- und ggf. auch die Kühlwirkung des mit hochgespanntem Dampf beaufschlagten Raums auf die Teile des Innengehäuses zweckmäßig verbessert.

In einer weiteren besonders bevorzugten Weiterbildung der ersten Variante ist das Außengehäuse axial geteilt, d. h. das Außengehäuse weist insbesondere eine Teilfuge auf, die im Wesentlichen in einer zur Längsachse quer orientierten Ebene verläuft. Insbesondere eignet sich hier eine Topfbauweise, die anhand der Zeichnung näher erläutert ist. Weitere vorteilhafte Weiterbildungen der ersten Variante sind den weiteren Unteransprüchen zu entnehmen und im Rahmen bevorzugter Ausführungsformen anhand der Zeichnung im Detail beispielhaft beschrieben.

Gemäß einer zweiten Variante der Erfindung ist das Druckmittel in Form von um die Teile des Innengehäuses aufgeschrumpften Schrumpfringen gebildet. Zusätzlich zu den bereits vorliegenden Fügemitteln, wie Schrauben, Bolzen oder Flansche, vermögen so genannte Schrumpfringe einen noch darüber hinausgehenden wesentlich höheren Druck auf die Teile des Innengehäuses auszuüben, so dass auch gemäß der zweiten Variante eine ausreichend sichere und beständige Schließwirkung für das Innengehäuse erreicht werden kann. Bei dieser zweiten Variante der Erfindung kann auf ein Druckmittel gemäß der ersten Variante ggf. verzichtet werden - grundsätzlich können die Druckmittel der ersten und zweiten Variante jedoch kombiniert werden.

Insbesondere erweist es sich als vorteilhaft, ggf. für ultrasuperkritische Dampfzustände, beide Varianten in Kombination vorzusehen.

In einer bevorzugten Weiterbildung der zweiten Variante ist das Außengehäuse vorzugsweise horizontal geteilt und weist insbesondere eine Teilfuge im Wesentlichen in einer zur Längsachse parallel orientierten Ebene auf. Gleiches gilt vorteilhafterweise bei der zweiten Variante für das Innengehäuse.

Die Erfindung führt auch auf eine Dampf- oder Gas- und Dampfturbinenanlage (GuD-Anlage) mit einer kombinierten Dampfturbine der oben erläuterten Art und einer Dampfturbinenperipherie mit einer Anzahl von Leitungs- und/oder Sammelkomponenten, die zur Beaufschlagung mit Dampf bei überkritischen Dampfzuständen ausgelegt sind.

Hinsichtlich des Verfahrens führt die Erfindung auf ein Verfahren zum Betrieb einer kombinierten Dampfturbine mit einem Hochdruckmodul und einem Mitteldruckmodul in einem beiden Modulen gemeinsamen Gehäuse, wobei das Gehäuse ein eine Expansionsstrecke umfassendes Innengehäuse und ein das Innengehäuse umfassendes Außengehäuse aufweist, und wobei das Innengehäuse durch mit Fügemittel zusammengefügte Teile gebildet ist. Erfindungsgemäß ist bei diesem Verfahren vorgesehen, dass das Hochdruckmodul in einer Expansionsstrecke mit Dampf bei überkritischen Dampfzuständen beaufschlagt wird und ein im Hochdruckmodul und/oder im Mitteldruckmodul zwischen Außengehäuse und Innengehäuse liegender Raum zur Unterstützung der Fügemittel im Betriebszustand mit hochgespanntem Dampf beaufschlagt wird.

Das Verfahren ist besonders vorteilhaft mit einer Dampfturbine gemäß der ersten Variante der Erfindung auszuführen und weist entsprechende Vorteile auf.

Ausführungsbeispiele der Erfindung werden nachfolgend anhand der Zeichnung beschrieben. Diese soll die Ausführungsbeispiele nicht maßgeblich darstellen, vielmehr ist die Zeichnung, wo zur Erläuterung dienlich, in schematisierter und/oder leicht verzerrter Form ausgeführt. Im Hinblick auf Ergänzungen der aus der Zeichnung unmittelbar erkennbaren Lehren wird auf den einschlägigen Stand der Technik verweisen. Im Einzelnen zeigt die Zeichnung in:
- FIG 1: eine erste Ausführungsform einer kombinierten Hochdruck-/Mitteldruckdampfturbine gemäß der ersten Variante der Erfindung;
- FIG 2: eine zweite Ausführungsform einer kombinierten Hochdruck-/Mitteldruckdampfturbine gemäß der ersten Variante der Erfindung;
- FIG 3: eine dritte Ausführungsform einer kombinierten Hochdruck-/Mitteldruckdampfturbine gemäß der ersten Variante der Erfindung;
- FIG 4: eine Ausführungsform einer Hochdruck-/Mitteldruckdampfturbine gemäß der zweiten Variante der Erfindung.

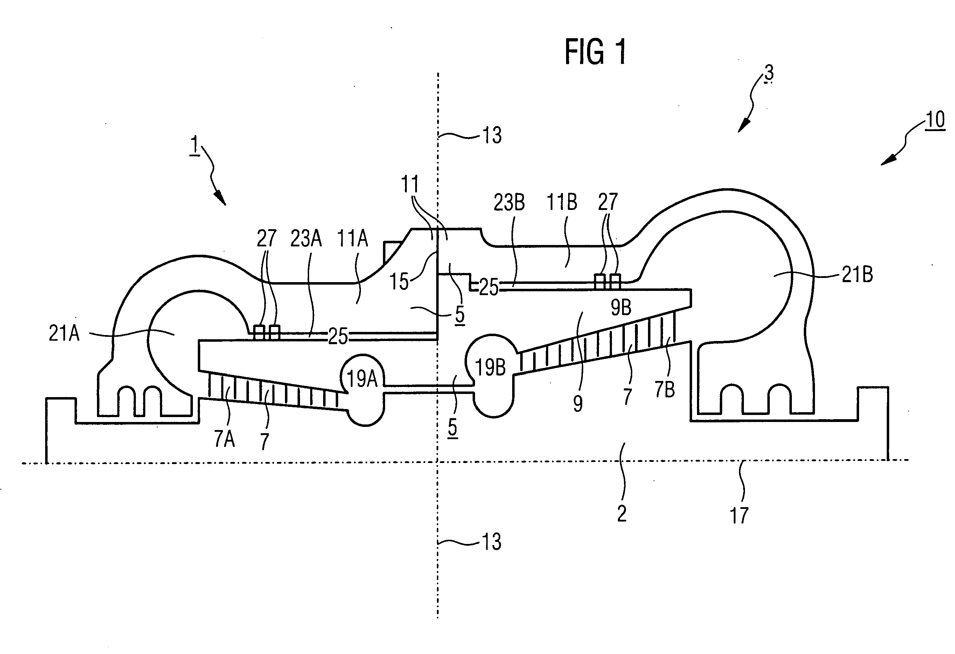

FIG 1 zeigt eine kombinierte Dampfturbine 10 mit einem Hochdruckmodul 1 und einem Mitteldruckmodul 3 in einem beiden Modulen 1, 3 gemeinsamen Gehäuse 5. Das Gehäuse 5 weist dabei ein eine Expansionsstrecke 7 umfassendes Innengehäuse 9 und ein das Innengehäuse 9 umfassendes Außengehäuse 11 auf. Vorliegend weist das Außengehäuse 11 einen Hochdruckteil 11A und einen Mitteldruckteil 11B auf, die beide in einer Topfbauweise gebildet sind und die axial geteilt sind, d. h. sie sind in einer durch die Linie 13 angedeuteten Ebene aneinander gefügt. Eine Teilfuge 15 verläuft im Wesentlichen in der durch die Linie 13 angedeuteten Ebene. Dieses Ebene ist im Wesentlichen quer zur Längsachse 17 der kombinierten Dampfturbine 10 orientiert.

Betrachtet man jedes Modul 1, 3 für sich in einer um 90° gedacht gedrehten Ansicht, so erscheint das Innengehäuse 9 des jeweiligen Moduls wie in einem durch das jeweilige Außengehäuse 11 gebildeten Topf, was den Namen "Topfbauweise" motiviert.

In der vorliegenden Ausführungsform ist das Hochdruckmodul 1 zur Beaufschlagung der Expansionsstrecke 7A in einem Innengehäuse 9 im Modul 1 mit Dampf bei überkritischen Dampfzuständen ausgelegt. Frischdampf in diesen Dampfzuständen wird im Hochdruckteil 1 über eine Einströmung 19A der Hochdruckexpansionsstrecke 7A zugeführt. Der Frischdampf wird der Einströmung 19A aus einem Kessel bzw. einem Frischdampfüberhitzer im überkritischen Dampfzustandsbereich zugeleitet, was in der FIG 1 nicht im Detail gezeigt ist. Der Frischdampf entspannt sich bis zum Abströmbereich 21A, der als eine torusförmige Kammer gebildet ist, auf Dampfzustände unterhalb des überkritischen Heißdampfbereichs. Von dort aus wird der Abdampf über einen Stutzen einem Kessel zur Zwischendampfüberhitzung zugeleitet, was in der FIG 1 nicht im Einzelnen gezeigt ist.

Ähnlich wird im Mitteldruckteil Dampf aus der oben genannten oder einen anderen Zwischendampfüberhitzung einer Einströmung 19B zugeleitet, entspannt sich im Expansionsbereich 7B und gelangt in den Abströmbereich 21B, der ebenfalls als eine torusförmige Kammer ausgebildet ist.

Im Bereich der Einströmungen 19A, 19B und der Expansionsstrecken 7A, 7B wirkt ein Innendruck auf das Innengehäuse 9, der die Tendenz hat, das obere Teil 9A und das nicht gezeigte, spiegelbildlich zur Achse 17 verlaufende untere Teil auseinander zu drücken. Dem wirken die in der FIG 1 nicht im Einzelnen dargestellten Fügemittel entgegen, die das obere Teil 9A und das nicht gezeigte, spiegelbildlich zur Achse 17 verlaufende untere Teil zusammenpressen. Das Innengehäuse 9 ist in der vorliegenden Ausführungsform horizontal geteilt und durch mit Fügemittel zusammengefügte Teile gebildet, nämlich dem Oberteil 9A und dem nicht gezeigten Unterteil. Die Fügemittel sind im Einzelnen nicht gezeigt. Als Fügemittel werden insbesondere Schrauben und Bolzen verwendet, die über ausreichend stark und groß dimensionierte Flansche das Oberteil 9A und das nicht gezeigte Unterteil des Innengehäuses 9 aneinander pressen.

Es hat sich im Rahmen der Erfindung jedoch gezeigt, dass es für eine ausreichend sichere und beständige Schließwirkung in der Teilfuge zwischen oberem Teil 9A und nicht gezeigtem unteren Teil des Innengehäuses 9 und insbesondere zur Verbesserung des Druckhaltevermögens des Innengehäuses 9 im Rahmen der Beaufschlagung mit Heißdampf im überkritischen Bereich (nämlich bei 19A und 7A) als auch im Mitteldruck-Bereich (nämlich bei 19B und 7B), vorteilhaft ist, das Hochdruckmodul 1 und/oder das Mitteldruckmodul 3 zur Unterstützung der Fügemittel mit weiteren Druckmitteln zum Zusammendrücken der Ober- und Unterteile 9A des Innengehäuses 9 zu versehen.

Im Rahmen der ersten Ausführungsform einer kombinierten Dampfturbine 10 gemäß der FIG 1 wird das Druckmittel in Form eines zwischen dem Außengehäuse 11 und dem Innengehäuse liegenden Raum 23A und 23B erreicht, der im Betriebszustand mit hochgespanntem Dampf 25 beaufschlagt wird, dessen Druck höher ist als in mindestens einer Einströmung 19A, 19B für mindestens eine der zwei Expansionsstrecken 7. Das heißt, das Druckmittel ist in Form von Frischdampf gebildet, der den Raum 23A oder 23B um das Innengehäuse 9 im Bereich der Hochdruck-Expansion 1 füllt. Vorliegend wird der Raum als ein für den Hochdruckteil 1 separater Raum 23A und für den Mitteldruckteil separater Raum 23B gebildet. Mit dem Raum 23A, 23B ist eine Zuführleitung für hochgespannten Dampf 25 verbunden, die nicht im Einzelnen gezeigt ist. Außerdem ist der Raum 23A, 23B gegen unmittelbar aus der Expansionsstrecke 7A, 7B in den Abströmbereich 21A, 21B austretenden Dampf durch ein dichtendes Trennmittel 27 in Form von z. B. Kolbenringdichtungen abgedichtet. Der Raum 23A, 23B kann also über die hier nicht gezeigten Zuführleitungen mit hochgespanntem Dampf beaufschlagt werden und ist aufgrund des Trennmittels gegenüber jedenfalls einem Teil des innenliegenden Bereichs des Innengehäuses 9 druckbeaufschlagt. Der hochgespannte Dampf 25 weist dazu einen höheren Druck auf, als jedenfalls der Heißdampf in der Expansionsstrecke 7A, 7B und der Heißdampf im Abströmbereich 21A, 21B. Das Oberteil 9A und das Unterteil 9B wird durch die Druckbeaufschlagung des Raums 23A, 23B durch hochgespannten Dampf 25 zusätzlich zur Wirkung der Fügemittel zusammengepresst. Dies führt zu einer nachhaltigen Verbesserung des Druckhaltevermögens, denn auf diese Weise wird eine ausreichend sichere und beständige Schließwirkung in der zwischen dem Oberteil 9A und dem nicht gezeigten im Wesentlichen spiegelbildlich zur Achse 17 verlaufenden Unterteil bestehenden Teilfuge erreicht.

Bei der in FIG 1 dargestellten ersten Ausführungsform einer kombinierten Dampfturbine 10 wird hochgespannter Dampf 25 zugeführt, nämlich Frischdampf, der auch im Bereich der Einströmungen 19A und 19B zur Verfügung steht. Dazu wird jedenfalls ein Teil der oben genannten Zuführung als dampfdichte Durchführung zwischen der Einströmungen 19A, 19B und dem Raum 23A, 23B zur Verfügung gestellt.

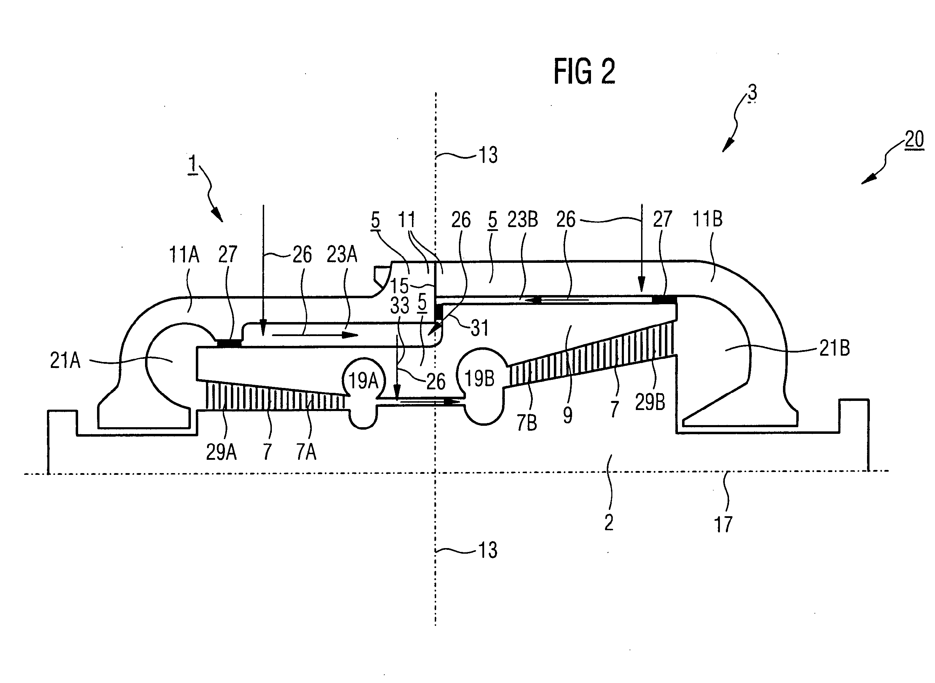

Der hochgespannte Dampf 26 kann ggf. auch aus dem Kessel, aus einer Frischdampf-Überhitzerstufe oder dem Wasserabscheider stammen und weist daher einen höheren Druck und eine geringere Temperatur auf. Dies wird in Bezug auf die FIG 2 erläutert.

FIG 2 zeigt eine zweite Ausführungsform einer kombinierten Dampfturbine 20 gemäß der ersten Variante der Erfindung, die in wesentlichen Merkmalen mit der in FIG 1 gezeigten ersten Ausführungsform übereinstimmt. Dementsprechend wurden gleiche Bezugszeichen für gleiche Teile verwendet.

Im Unterschied zu der in FIG 1 dargestellten Ausführungsform ist bei der vorliegenden kombinierten Dampfturbine 20 der hochgespannte Dampf 26 dem Raum 23A, 23B von extern zugeführt. Der hochgespannte Dampf 26 wird als Kühldampf direkt aus der Frischdampfüberhitzung genommen. Der hochgespannte Dampf 26 wird beispielsweise aus einer im Außengehäuse 11 umlaufenden Kammer dem Raum 23A oder 23B zugeführt, wobei die Kammer von außen mit einem Stutzen angeschlossen ist. Die Kammer und der Stutzen sind hier im Einzelnen nicht gezeigt. Die Kammer und der oben genannte Stutzen sind jeweils im Bereich des Außengehäuses 11A beim Hochdruckmodul und des Außengehäuses 11B beim Mitteldruckmodul im Bereich der Zuführung des hochgespannten Dampfes 26 angeordnet.

Durch die direkte Entnahme des hochgespannten Dampfes 26 aus der Frischdampfüberhitzung wird jedenfalls ein Teil der Frischdampfüberhitzung umgangen, so dass der hochgespannte Dampf etwas kühler als der Frischdampf ist, aber einen höheren Druck als der Frischdampf in der Einströmung 19A, 19B aufweist. Vorliegend hat der hochgespannte Dampf 26 also nicht nur einen höheren Druck als der in der Expansionsstrecke 7A, 7B befindlich Heißdampf, sondern auch einen höheren Druck als der in der Einströmung 19A befindliche Frischdampf. Damit wird eine noch bessere Druckwirkung als bei der in FIG 1 gezeigten Ausführungsform erzielt.

Der hochgespannte Dampf 26 expandiert wie durch die Pfeile im Raum 23A, 23B angedeutet, weiter im Kolben des Hochdruck-Moduls bzw. des Mitteldruck-Moduls und kühlt damit kritische Bereiche des Gehäuses 5, insbesondere des drucktragenden Außengehäuses 11.

Der Raum 23A und 23B können dabei verbunden sein.

Die weitere Führung des hochgespannten Dampfes 26 kann durch radikale Bohrungen 33 im Innengehäuse 9 auf die Welle 2 erfolgen. Diese Bohrungen befinden sich im Wellendichtungsbereich zwischen den Einströmungen, insbesondere nahe 19A. Aufgrund der Druckverhältnisse expandiert der Kühldampf hin zu beiden Einströmungen.

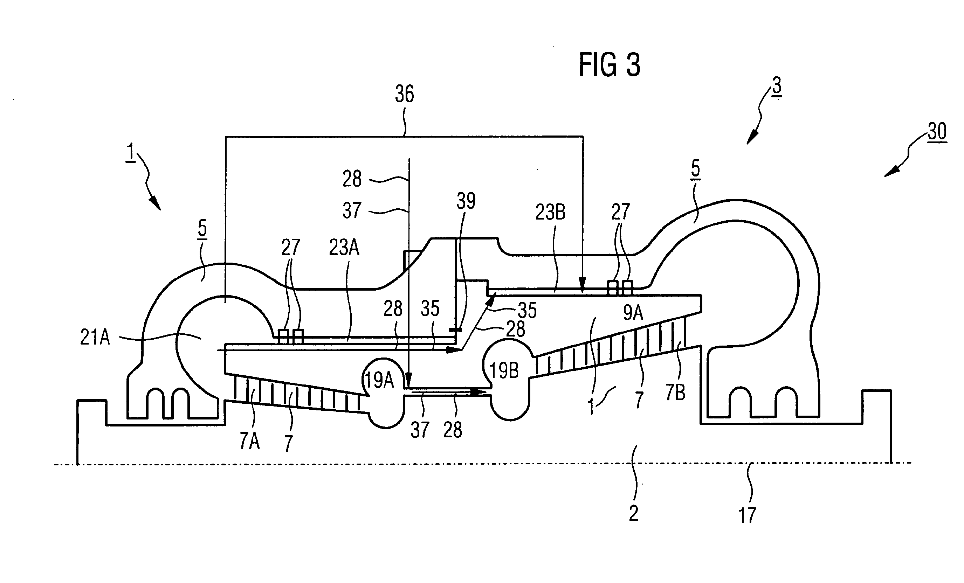

FIG 3 zeigt eine dritte Ausführungsform einer kombinierten Dampfturbine 30, die in ihrer Bauart im Wesentlichen den in den FIG 1 und FIG 2 gezeigten Ausführungsformen ähnelt. Im Unterschied zu den letzteren Ausführungsformen wird als Druckmittel ein Bereich der Mitteldruck-Expansion 3 der Hochdruck-Abdampf der kombinierten Dampfturbine 20 verwendet. Dazu sind die Räume 21A und 23B durch eine Leitung 35 verbunden, die vorteilhaft als interne Leitung durch das Innengehäuse 9 oder als externe Leitung 36 erfolgen kann. Die Räume 23A und 23B sind notwendigerweise durch eine Abdichtung 39 voneinander getrennt.

Weiterhin ist, ähnlich wie in der zweiten Ausführungsform der FIG 2, eine Überschuss- oder Defizitkühlung (Vermischung mit Leckdampf) im Kolben, insbesondere im Bereich der Welle 2, sinnvoll. Deshalb ist, ähnlich wie die Zuführung 33 in der zweiten Ausführungsform 20 der FIG 2, vorliegend eine Zuführung 37 für hochgespannten Dampf 28 in den Bereich der Welle vorgesehen.

Der Raum 23A des Hochdruckmoduls 1 wird also durch hochgespannten Dampf 28 vornehmlich aus einer externen Zuführung 37 beaufschlagt. Dies kann vorzugsweise Kühldampf sein, wie er in der zweiten Ausführungsform der FIG 2 beschrieben wurde, sein. Im Raum 23A des Hochdruckmoduls 1 entspricht der hochgespannte Dampf 28 der kombinierten Dampfturbine 30 im Wesentlichen dem hochgespannten Dampf 26 der zweiten Ausführungsform. Darüber hinaus wird aber betreffend den hochgespannten Dampf 28 im Raum 23B des Mitteldruckmoduls 3 durch die Entnahme aus dem Abströmbereich 21A des Hochdruckmoduls 1 eine Zwischenüberhitzung übergangen. Damit ist der hochgespannte Dampf 28 im Raum 23B des Mitteldruckmoduls kühler als der Dampf aus der Zwischenüberhitzung und weist einen höheren Druck auf, denn der Druckverlust des Kessels der Zwischenüberhitzung wird umgangen. Auf diese Weise befindet sich sowohl im Raum 23A des Hochdruckmoduls 1 als auch im Raum 23B des Mitteldruckmoduls 3 hochgespannter Dampf bei höheren Drücken als Frischdampf im Bereich der Einströmung 19A bzw. Zwischenüberhitzerdampf in der Einströmung 19B und erst recht mit einem höheren Druck als im Bereich der jeweiligen Expansionsstrecke 7A, 7B. Auf diese Weise wird das Oberteil 9A und das Unterteil 9B des Innengehäuses zusätzlich zu den üblicherweise vorgesehenen Fügemitteln zusammengedrückt.

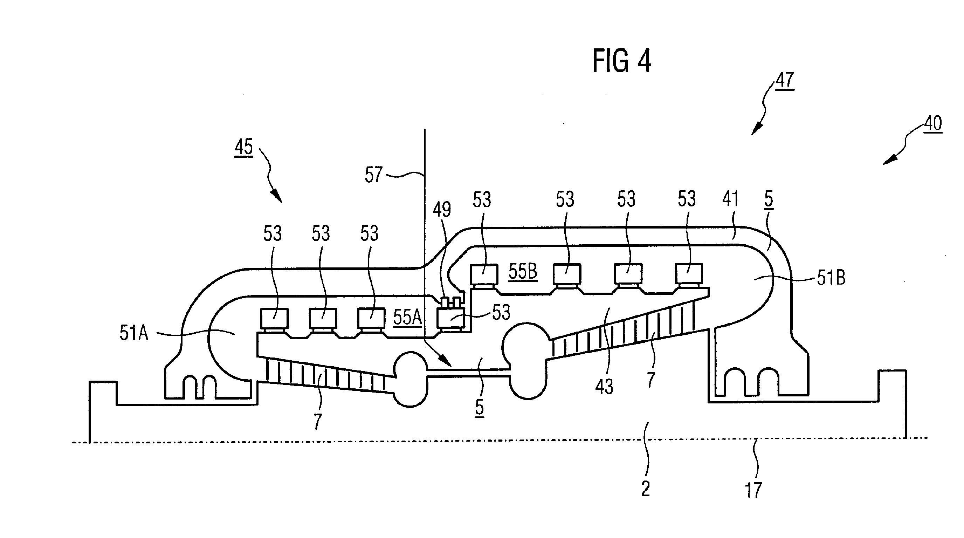

FIG 4 zeigt eine Ausführungsform einer kombinierten Dampfturbine 40 gemäß der zweiten Variante der Erfindung. Im Unterschied zu den in den FIG 1, FIG 2 und FIG 3 gezeigten Ausführungsformen ist diese Dampfturbine 40 nicht in der Topfbauweise realisiert, d. h. vor allem, dass das Außengehäuse 41 keine Axialteilung aufweist. Vielmehr ist das Außengehäuse 41 in einer hier nicht gezeigten Weise, ähnlich wie das Innengehäuse 43, horizontal geteilt. Das Hochdruckmodul 45 und das Mitteldruckmodul 47 der kombinierten Dampfturbine 40 ist vorliegend durch eine Kolbenringdichtung 49 voneinander getrennt.

Insofern handelt es sich vorliegend weniger um Module als für eine Hochdruckbeaufschlagung bzw. Mitteldruckbeaufschlagung ausgelegte Teile 45, 47 der kombinierten Dampfturbine 40. Diese Teile werden im Folgenden dennoch aufgrund ihrer unterschiedlichen Beaufschlagungsparameter als Module 45, 47 bezeichnet, ohne dass der Begriff "Modul" eine baulich modulare Einheit impliziert.

Die Abströmbereiche 51A im Hochdruckmodul 45 und 51B im Mitteldruckmodul 47 setzen sich auch im Zwischenraum oberhalb des oberen Teils 43A des Innengehäuses 43 fort und sind über die Kolbenringdichtung 49 gegeneinander getrennt. Das Druckmittel wird vorliegend in Form mehrerer um die Teile des Innengehäuses 43 aufgeschrumpfter Schrumpfringe 53 gebildet. Die Schrumpfringe 53 pressen also zusätzlich die Teile 43A, 43B des Innengehäuses 43 aufeinander.

Die sich in die oberen Bereiche 55A, 55B zwischen Innengehäuse 43 und Außengehäuse 41 fortsetzenden Abströmbereiche 51A, 51B sind also jeweils mit Abdampf aus dem Hochdruckmodul 45 bzw. Abdampf aus dem Mitteldruckmodul 47 beaufschlagt, was so zu einer Kühlung des Innengehäuses 43 führt. Zusätzlich können, ähnlich wie die Zuführungen 33, 37 in FIG 2 und FIG 3, dampfdichte Zuführungen 57 aus der Frischdampf-Überhitzung aus den Bereichen 55A und 55B zum Kolben hin für eine zusätzliche Kühlung der Welle 2 beitragen.

Kombinierte Dampfturbinen weisen ein Hochdruckmodul 1, 45 und ein Mitteldruckmodul 3, 47 in einem beiden Modulen gemeinsamen Gehäuse 5 auf, wobei das Gehäuse 5 ein zwei Expansionsstrecke 7 umfassendes Innengehäuse 9, 43 und ein das Innengehäuse 9, 43 umfassendes Außengehäuse 11, 41 aufweist und wobei das Innengehäuse 9, 43 durch mit Fügemittel zusammengefügte Teile 9A, 43A gebildet ist. Üblicherweise sind kombinierte Dampfturbinen für unterkritische Dampfzustände ausgelegt. Um eine kombinierte Dampfturbine 10, 20, 30, 40 auch für überkritische Dampfzustände nutzen zu können, ist im Unterschied zu üblichen kombinierten Dampfturbinen ein Gehäuse 5 mit einer sicheren und beständigen Schließwirkung versehen. Gemäß dem neuen Konzept ist dazu das Hochdruckmodul 1, 45 zur Beaufschlagung einer Expansionsstrecke 7A mit Dampf bei überkritischen Dampfzuständen ausgelegt und das Hochdruckmodul 1, 45 und/oder das Mitteldruckmodul 3, 47 weist zur Unterstützung der Fügemittel ein Druckmittel zum Zusammendrücken der Teile 9A, 43A des Innengehäuses 9, 43 auf.

## Patentansprüche

1. Kombinierte Dampfturbine (10, 20, 30, 40) mit einem Hochdruck-Modul (1, 45) und einem Mitteldruck-Modul (3, 47) in einem beiden Modulen gemeinsamen Gehäuse (5), wobei das Gehäuse (5) ein zwei Expansionsstrecken (7) umfassendes Innengehäuse (9, 43) und ein das Innengehäuse (9, 43) umfassendes Außengehäuse (11, 41) aufweist, und wobei
das Innengehäuse (9, 43) durch mit Fügemittel zusammengefügte Teile (9A, 9B, 43A, 43B) gebildet ist,
**dadurch gekennzeichnet, dass**
das Hochdruck-Modul (1, 45) zur Beaufschlagung einer Expansionsstrecke (7A) mit Dampf bei überkritischen Dampfzuständen ausgelegt ist, und
das Hochdruck-Modul (1, 45) und/oder das Mitteldruck-Modul (3, 47), zur Unterstützung der Fügemittel, ein Druckmittel zum Zusammendrücken der Teile (9A, 9B, 43A, 43B) des Innengehäuses (9, 43) aufweist.

2. Kombinierte Dampfturbine (10, 20, 30) nach Anspruch 1,
**gekennzeichnet durch**
einen im Hochdruck-Modul (1) und/oder im Mitteldruck-Modul (3) zwischen Außengehäuse (11) und Innengehäuse (9) liegenden Raum (23A, 23B), der zur Bildung des Druckmittels im Betriebszustand mit hochgespanntem Dampf (25, 26, 28) beaufschlagt wird, dessen Druck höher ist als in mindestens einer Einströmung (19A, 19B) für mindestens eine der zwei Expansionsstrecken (7).

3. Kombinierte Dampfturbine (10, 20, 30) nach Anspruch 1 oder 2,
**gekennzeichnet durch**
eine mit dem Raum (23A, 23B) verbundene Zuführung (31, 33, 37) für hochgespannten Dampf (25, 26, 28) und den Raum (23A, 23B) gegen unmittelbar aus der Expansionsstrecke (7A, 7B) austretenden Dampf (25, 26, 28) dichtendes Trennmittel (27).

4. Kombinierte Dampfturbine (10) nach Anspruch 2 oder 3,
**dadurch gekennzeichnet, dass**
eine Zuführung mit einer Einströmung (19A, 19B) verbunden ist, zur Zuführung von hochgespanntem Dampf (25) in Form von Einspeisedampf (FIG 1).

5. Kombinierte Dampfturbine (20) nach einem der Ansprüche 2 bis 4,
**dadurch gekennzeichnet, dass**
eine Zuführung mit einem Frischdampf-Überhitzer verbunden ist, zur Zuführung von hochgespanntem Dampf (26) in Form von externem, direkt einer Frischdampf-Überhitzung entnommenem Frischdampf (FIG 2).

6. Kombinierte Dampfturbine (20) nach einem der Ansprüche 2 bis 5,
**dadurch gekennzeichnet, dass**
eine Zuführung (31) einen Raum (23B) des Mitteldruck-Moduls (3) mit einem Raum (23A) des Hochdruck-Moduls (1) verbindet (FIG 2).

7. Kombinierte Dampfturbine (30) nach einem der Ansprüche 2 bis 6,
**dadurch gekennzeichnet, dass**
eine Zuführung (35) einen Abströmbereich (21A) des Hochdruck-Moduls (1) mit einem Raum (23B) des Mitteldruck-Moduls (3) verbindet (FIG 3).

8. Kombinierte Dampfturbine (10, 20, 30) nach Anspruch 7,
**dadurch gekennzeichnet, dass**
die Zuführung eine interne oder externe Dampfleitung ist.

9. Kombinierte Dampfturbine (10, 20, 30) nach einem der Ansprüche 1 bis 8,
**dadurch gekennzeichnet, dass**
Kühldampf aus einem Raum (23A, 23B) auf eine Wellendichtung gegeben wird, insbesondere durch eine Bohrung im Innengehäuse und/oder eine externe Leitung.

10. Kombinierte Dampfturbine (10, 20, 30) nach einem der Ansprüche 1 bis 8,
**dadurch gekennzeichnet, dass**
das Außengehäuse (11) axial geteilt ist, wobei insbesondere eine Teilfuge im Wesentlichen in einer zur Längsachse (17) quer orientierten Ebene verläuft.

11. Kombinierte Dampfturbine (10, 20, 30) nach einem der Ansprüche 1 bis 10,
**dadurch gekennzeichnet, dass**
der hochgespannte Dampf (25, 26, 28) in Form von Kühldampf gebildet ist und zwischen Außengehäuse (11) und Innengehäuse (9) ein Kühlraum (23A, 23B) gebildet ist.

12. Kombinierte Dampfturbine (40) nach Anspruch 1,
**dadurch gekennzeichnet, dass**
das Druckmittel in Form eines um die Teile (43A, 43B) des Innengehäuses aufgeschrumpften Schrumpfringes (53) gebildet ist.

13. Kombinierte Dampfturbine (40) nach Anspruch 12,
**dadurch gekennzeichnet, dass**
das Außengehäuse (41) horizontal geteilt ist, wobei insbesondere eine Teilfuge im Wesentlichen in einer zur Längsachse (17) parallel orientierten Ebene verläuft.

14. Dampf- oder Gas- und Dampf-Turbinenanlage mit einer kombinierten Dampfturbine (10, 20, 30, 40) nach einem der vorhergehenden Ansprüche und einer Dampfturbinen-Peripherie mit einer Anzahl von Leitungs- und/oder Sammelkomponenten, die zur Beaufschlagung mit Dampf bei überkritischen Dampfzuständen ausgelegt sind.

15. Verfahren zum Betrieb einer kombinierten Dampfturbine (10, 20, 30) mit einem Hochdruck-Modul (1) und einem Mitteldruck-Modul (3) in einem beiden gemeinsamen Gehäuse (5), wobei das Gehäuse ein zwei Expansionsstrecken (7) umfassendes Innengehäuse (9) und ein das Innengehäuse (9) umfassendes Außengehäuse (11) aufweist, und wobei
das Innengehäuse (9) durch mit Fügemittel zusammengefügte Teile (9A, 9B) gebildet ist,
**dadurch gekennzeichnet, dass**
das Hochdruck-Modul (1) in einer Expansionsstrecke (7A) mit Dampf bei überkritischen Dampfzuständen beaufschlagt wird, und
ein im Hochdruck-Modul (1) und/oder ein im Mitteldruck-Modul (3) zwischen Außengehäuse (11) und Innengehäuse (9) liegender Raum (23A, 23B), zur Unterstützung der Fügemittel im Betriebszustand mit hochgespanntem Dampf (25, 26, 28) beaufschlagt wird.
